# EUROPEAN PATENT APPLICATION

(11) **EP 3 975 087 A1**
(43) Date of publication of application: **30.03.2022**
(21) Application number: 20731158.0
(22) Date of filing: 05.05.2020
(51) Int. Cl.: G06Q 10/08, G06Q 50/28, G06Q 30/00

(54) **METHOD FOR CERTIFYING THE STATE OF DISTRIBUTED PRODUCTS AFTER THEIR DELIVERY AT THE MOMENT OF OPENING THE PACKAGING**

(30) Priority: 21.05.2019 ES 201930446
(71) Applicant: Jimenez Martin, Antonio Jose, 41440 Lora del Rio (ES)
(72) Inventor: Jimenez Martin, Antonio Jose, 41440 Lora del Rio (ES)
(74) Representative: González López-Menchero, Álvaro Luis
(86) International application number: PCT/ES2020/070287
(87) International publication number: WO 2020/234494

(57) **Abstract**

The present invention relates to a certification method that takes place after the delivery of the product at the time of opening the packaging, comprising the steps of: Providing a unique identification code for each packaging (1), shipment and receipt of the order, activating an application hosted in a smartphone (3), reading (4) the unique identification code with the smartphone or tablet, starting the recording (7) of a video, and completing the recording process, such that when the recording process is completed, it is uploaded to servers (6), and in the event that the product is defective or incomplete, the claim process starts in a certified manner. It is also possible for the seller to certify the condition of the products at source and the packaging process thereof, making a video recording that is completed by uploading it to the servers. Additionally, and in a complementary way, the certification of the sale agreement reached between seller and buyer can be carried out by generating a certificate of the agreement.

## Description

### OBJECT OF THE INVENTION

The object of the present invention, as stated in the title of the invention, is a certification method for certifying the condition of the distributed products, which takes place after delivery of the products at the time of opening the packaging.

Another object of the present invention is to complement the previous method by means of the certification of a sale agreement.

The present invention is characterised in that it combines technical means and actions that enable the condition of the distributed products to be certified in a simple and effective way at the time of delivery, in other words, if they were in good condition and having all of the parts thereof.

Therefore, the present invention falls within the scope of product distribution and particularly among certification actions, both in delivery and in trade agreements.

### BACKGROUND OF THE INVENTION

Every day, end consumers make purchases from online stores or from private sellers on shopping platforms, sometimes by paying cash on delivery and other times paying through payment gateways such as PayPal, Google Pay, credit or debit cards, or similar. The level of security in money transfers controlled by payment gateways and the sales platforms themselves is usually good, but it is very inadequate when it comes to deciding on a settlement to a claim since they do not use reliable proof of the products that reach the consumer or their condition. Furthermore, when orders are placed by paying cash on delivery or by transfer, the claims thereof are usually handled directly by the stores or private sellers themselves, leaving the consumer less protected than if they had used other means of payment, since in this particular case there is no payment gateway or mediating agent.

When the purchase is made by means of a payment gateway, the stores or platforms usually handle the complaints with the help of the payment gateways or mediating agents themselves, examining and deciding on a settlement after requesting proof and evidence of deficiencies from both parties, most of which are easily manipulated and not at all reliable.

The proof they request is usually the following:
- Tracking No. (tracking code or number of the shipment being made by the shipping company). This only certifies the traceability of the shipment and whether it was delivered or not.
- Proof of delivery from the shipping company. This is only proof of whom the order was delivered to, although it can be easily manipulated since in many cases and due to the work overload of the carriers, these carriers do not usually ask for the physical ID, but rather only the name, the ID number and the signature, such that anyone can provide a random ID number, another name and another signature that do not correspond with the data of the buyer.
- Customer photographs or videos (Proof that can be easily manipulated since the customer could take the products out, put them aside and take a photo or video saying that the package arrived empty, or they could put a different product or an old product in poor condition, instead of the one that actually arrived. This proof could even be modified directly by means of a computer program for graphic retouching).
- Report to law enforcement agencies such as civil guard or police (This claim could be false as there is no proof that certifies which products arrived nor the condition thereof). However, most payment gateways and sales platforms usually admit these claims, leaving stores and private sellers completely unprotected against this type of scam or fraud.

Therefore, an object of the present invention is to develop a system and a method that enables certifying the condition of the products delivered at the destination that were previously agreed upon by developing a system and a method such as the one described below, which is essentially included in the first claim.

### DESCRIPTION OF THE INVENTION

The object of the present invention is a certification method for certifying the condition of the distributed products, which takes place after delivery of the products at the time of opening the packaging, and that intends to avoid scams by customers or sellers, as well as demonstrate issues with the products received, fraudulent claims of empty, incomplete packages, or defective or malfunctioning products. It further offers security to purchases paid by cash on delivery, in addition to the other purchases made with other payment methods, preventing and streamlining many of the procedures associated with claims, and certifying the condition of the products on delivery.

Another object of the present invention is the additional possibility of being able to certify the agreements reached and the condition of the products at the source thereof:
The method comprises the following actions:
- Generating with software a unique identification code for each seller and also for each order processed by each seller. This unique identification code can be created by the certification system itself or by the code generated by the carrier or by the store.
- Providing a unique identification code for each shipment and seller, which can be placed on a package, a box, an envelope, a pallet or any other type of packaging or wrapping. Said unique identification code can be scanned by smartphones, tablets, PC peripherals or any other mobile device, and can be encoded in different formats, either a QR code, a barcode or other graphic representations, as well as RFID or similar. The code may be included in the following possible ways:
   - On the carrier's own adhesive label, integrating the two generated codes on a single label.
   - Being the same code used by the carrier or the store on a label.
   - On an extra adhesive label that may have holographic technology to ensure that it is not plagiarised, and/or VOID technology or similar which leaves visible adhered residue if there is an attempt to remove it, and/or extra-strong adhesive technology so that it deteriorates if manipulated. This label will act as a seal and, depending on the type of packaging, it may be a simple adhesive label; or if the packaging does not leave any sign of breakage or trace of manipulation when there is an attempt to access the interior thereof, it may be a multiple adhesive label to leave evidence of the opening of any of the flaps on the package in question.
   - Screen printing, engraving or painting on the appropriate wrapping for each order, which will include extra-strong adhesive so that said wrapping will deteriorate in the case of manipulation.
- Shipment of the order by the seller and subsequent receipt by the buyer of the envelope, package, box or pallet provided with a seal or seals with their unique identification code. In the case that they are not online stores with assigned coding and they have not been previously registered, it is necessary to register the unique identification code at source.
- Activating an application hosted on the smartphone or tablet or any other mobile device or PC with an internet connection that cooperates with the certification process.
- Reading the unique identification code of the seal or seals with the smartphone, tablet, PC peripheral or any other mobile device to identify and register them on the certifying platform.
- Recording a video showing the packaging, the coded seals and the opening process until the received product, the condition thereof and the parts that make it up are shown, in order to store it in the cloud.
- Completing the recording process.
- When the recording process is completed, this recording is uploaded to servers, ensuring the availability thereof to users so they can access the certified proof when they need it.
- In the event that the product arrives with some issue or it is defective, the claim process begins, the application asks the customer for the order number or tracking number and the seller is notified of the claim; failing that, the process ends.

When the activation of an application hosted in the smartphone or tablet or any other mobile device or PC with an internet connection is discussed, it means that the seller activates an application as a certifying platform, hosted in a smartphone, tablet or any other mobile device and also accessible from a PC with an internet connection, which cooperates with the certification process.

The method can be complemented by a series of steps that serve to certify the agreements reached by the buyer and seller prior to the transaction and that take place after generating and providing the unique identification code. Additional steps that might take place are:
- Activating an application as a certifying platform, hosted in a smartphone, tablet or any other mobile device and also accessible from a PC with an internet connection, which cooperates with the certification process, by the private seller. In the case of online stores, it will suffice that these stores have been previously registered in the platform, since they will be assigned their own differentiated coding for the seals that they use and therefore it will not be mandatory for them to activate the application or enter the platform every time they need to make a shipment with the certification we are describing.
- Reading the unique identification code of the seal or seals at source with the smartphone, tablet, PC peripheral or any other mobile device to identify and register them on the certifying platform. This step is mandatory for sales made by private sellers; however, it is not mandatory for sales made by online stores since each store will have its own differentiated coding for each of the seals that they use, such that it will be possible to identify the store at the destination and associate the order corresponding to that sale, thereby facilitating the task of shipment processing or automation.
- Filling in a descriptive form as an agreement on the product or products to be sold, including the following fields which are only mandatory for private sellers and not for online stores. This action can be made before the reading the unique identification code. In a possible embodiment, the form comprises the following data:
   * **Web link field:** To include a web link of an advertisement published by the seller on any website.
   * **Detailed or complementary description form:**
      To include detailed or complementary information about the product or products to be sold, wherein texts about the condition, features, photographs, accessories, units and other relevant information thereof not shown in the advertisement or discussed by both parties after a private telephone conversation, by courier or any other communication method may be included.
   * **Mobile telephone field:** To include the buyer's mobile telephone number.
- Optionally, a video recording can be made at source, which allows the private seller or online store to record a video of the condition of the products at source, the packaging thereof and the placement of the necessary security seal or seals before proceeding with the shipment in order to store it in the cloud. The recording must take a clear shot of the seals with their codes, as well as the shipment label and its information. In order to properly take these clear shots without blind spots, the package must be slowly rotated 360° about two perpendicular axes.
- Sending a notice to the buyer to proceed with the electronic signature or acceptance, the acceptance having the value of an electronic signature. Once the descriptive form about the agreement has been saved along with the coding of the seals, if necessary, and the mobile phone field, the certifying platform will notify the buyer that the sales agreement is available on the platform to be signed electronically; on the other hand, if the buyer is not yet registered, he will be informed about how to do it and proceed with his electronic signature. This step is mandatory for sales made by private sellers; however, it is not mandatory for sales made by online stores.
- Acceptance or electronic signature by the buyer of the sales agreement including the details of the product or products to be sold. This step is mandatory for buyers who intend to make a purchase from private sellers; however, it is not mandatory for buyers who intend to make a purchase from online stores since the stores have online catalogues with descriptions, purchase conditions and furthermore, they issue delivery notes and invoices as proofs of purchase.
- Generating a certified sales agreement. The platform will generate a certified sales agreement based on the information obtained in the previous steps. To be able to include certified proof of the seller's advertisement in the agreement, the platform will capture and store the advertisement's web page so that it cannot be manipulated or edited after the buyer has accepted. This step is mandatory for sales made by private sellers; however, it is not mandatory for sales made by online stores.
- Closing the packaging and placing the coded security seal or seals by the private seller or online store.

If the code used is the carrier or store's own code, both the carrier and the store must register it at source and if the product arrives with some issue or it is defective, the user will have access to the proof, hosted in the cloud, and must make the claim manually, notifying the seller or the mediating agent about the incident, sending them the proof.

This scanning or registration of the code at source, in the case of private sellers, is mandatory at source because the codes that will be supplied to them will be codes with random encryption, without distinction as to which private seller each code belongs to. Therefore, it is mandatory that it is scanned from the seller profile thereof.

In the case that, additionally and in a complementary way, the packaging process of the product is also to be certified by the seller before shipment thereof, the following additional actions are carried out after providing the unique identification code and activating the application as a certifying platform.
- Reading the unique identification code of the seal or seals with the smartphone, or tablet, PC peripheral or any other mobile device to identify and register them on the certifying platform.
- Recording a video showing the packaging process of the product or products to be shipped, the condition thereof and the parts that make it up, as well as the coded seals.

- Completing the recording process.
- When the recording process is completed, this recording is uploaded to the cloud, ensuring the availability thereof to the users so they can access the certified proof when they need it.

These additional actions certify not only the condition of the products upon receipt, but also the condition of the products and packaging at the time they are packed.

In the case that, additionally and in a complementary way, the seller wants to check the opening of each shipped order, regardless of whether or not it is an order with a claim, the following additional actions are carried out after activating the application as a certifying platform.
- Accessing the log of shipped orders and subsequent filtering by date, order number and any other data item stored in the platform. Accessing the proof of the selected shipment.

These additional actions allow the seller to view each of the videos recorded for each of the shipped orders, always during the period that these videos can be consulted, to thus check the condition of the products and packaging at the time they are opened for statistical or quality purposes, although they are not related to claims.

Except when indicated otherwise, all of the technical and scientific elements used in this specification have the meaning commonly understood by a person with average skill in the art to which this invention belongs. When this invention is put into practice, methods and materials may be used that are similar or equivalent to the ones described in this specification.

Throughout the description and the claims, the word "comprises" and its variants do not intend to exclude other technical features, additions, components or steps. For those skilled in the art, other objects, advantages and features of the invention may be deduced from both the description and the practical use of the invention.

### EXPLANATION OF THE DRAWINGS

As a complement to the present description, and for the purpose of helping to make the features of the invention more readily understandable, in accordance with a preferred practical exemplary embodiment thereof, said description is accompanied by a set of drawings constituting an integral part of the same, which by way of illustration and not limitation represent the following.
Figure 1 shows a simplified diagram that shows the steps of the certification process for certifying the condition of the products at the time of opening the packaging after their delivery.
Figure 2 shows that, in addition to certifying the condition of the products at the time of opening the packaging after their delivery, it is possible to certify the condition of the products at source when they are packed.
Figure 3 shows an exemplified graphic representation in which the process for generating a complete certificate of a sales agreement is shown, including condition of the products at source and condition of the products at the destination.
Figure 4 shows the different types of seal carriers of the unique identification codes which will be used depending on whether the packaging is an envelope or a box.

### PREFERRED EMBODIMENT OF THE INVENTION

With reference to the figures, a preferred embodiment of the invention proposed is described below.

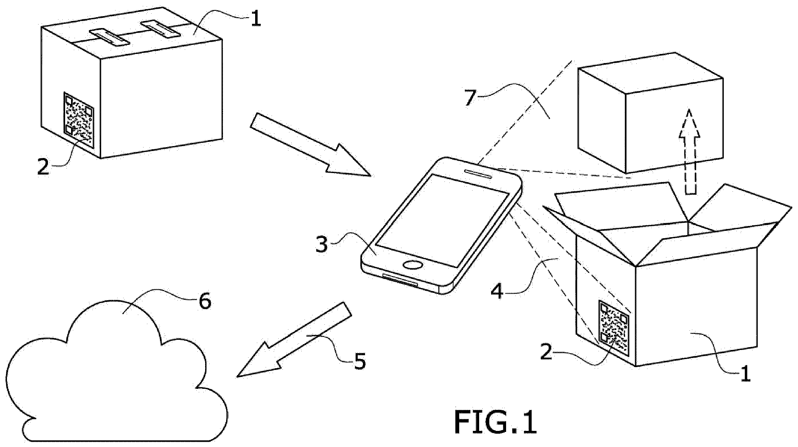

Figure 1 shows that the seller places a unique identification code on the packaging (1), which in this case is a single sticker with its QR code (2), in addition to placing the seals corresponding to that code for each one of the flaps of the packaging; next, once the product is packed, it is shipped to the buyer. Once received, when the customer wishes, he will open an application on his smartphone (3) or tablet and scan (4) the unique identification code.

It is important to note that in the case of not being an online store, it is necessary to register the unique identification code at source.

At this moment, the application of the smartphone (3) or tablet will be ready to start recording the video (7), and the option to start recording or go back will be shown. If the customer is ready, he will accept and start recording the video in detail, focusing on the QR code and the carrier code if any, as well as on the seals available, capturing the external condition of the package by means of two 360° rotations of the package about perpendicular axes to verify that the package has not been opened or manipulated, to then begin to open it. Once opened, he must continue to record the products and/or accessories purchased. Optionally, the customer can also record the start-up and operation of the products and/or accessories purchased.

The user will end the video recording when desired, although the application will have a set maximum duration of the video that the customer will know before proceeding with the recording.

Upon completion of the recording, the user must choose one of the two options that appear on the screen of his device to confirm if he has observed any deficiency or problem in his order. If the answer is NO, the application will send (5) the video file to a cloud (6) so that it will be hosted there for several weeks or months. If the answer is YES, the application will also send (5) the video file to the cloud (6) so that it will be hosted there for several months or years.

Once the video is automatically saved in the cloud (6), a link will be generated with direct access to view said video or proof of the video. Whenever a deficiency has been observed, a dispute or claim will be automatically opened by sending an email to the seller, informing them of the deficiency and attaching said link as proof of receipt and condition of the products purchased or attaching the proof of the video. The seller will proceed to review the video. At the same time, the buyer can further open a dispute or claim with the corresponding payment gateway or mediating agent and provide the link to the video as authoritative and certified proof or the proof of the video. If the scanned code is the carrier's own code and a deficiency is detected, the customer should manually send a claim to the seller, sending a link to the video as proof or sending the proof of the video.

Optionally, the system may enable sellers and/or buyers to consult the certifying platform itself about the videos of the orders, the status of the dispute or claim, and other data such as dates, geolocation, in addition to other fields that have been enabled to provide as much information as possible to both.

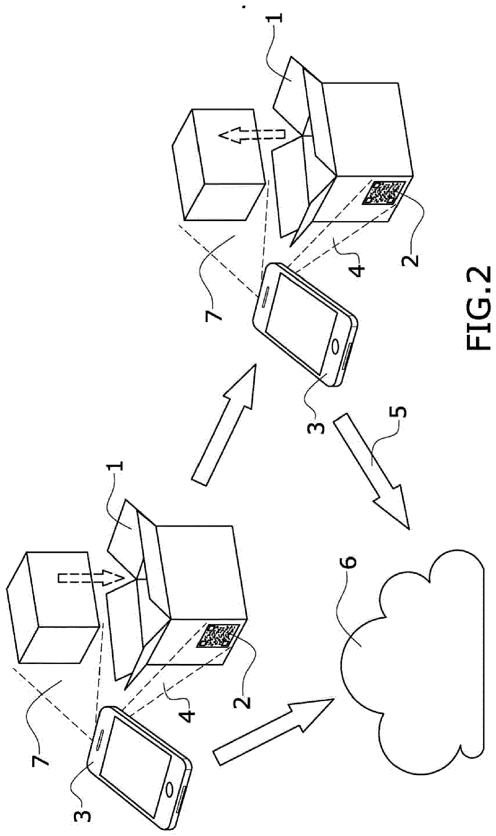

Figure 2 shows the method completed optionally in order to also guarantee not only the condition of the product at the destination, but also at source. Therefore, after placing a unique identification code on the packaging, in this case shown on a QR code (2), and the corresponding seals thereof for the packaging flaps, the seller activates the application on a smartphone (3) or tablet, where the unique identification code is scanned (4) first and then the recording process (7) of the packaging begins. When it is completed, the proof of the recorded video is automatically sent along with the unique identification code to servers (6); this way, both buyer and seller have certified proof of the shipment condition of the product and the receipt condition of the product.

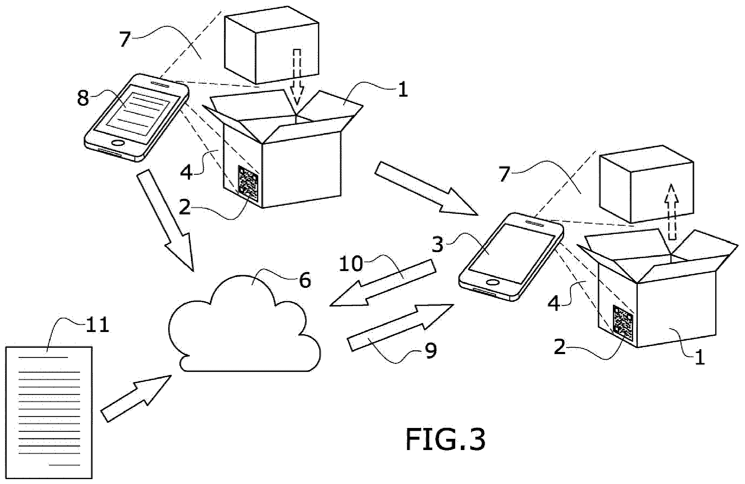

Figure 3 shows a complementary embodiment of the one shown in Figure 1, wherein, in addition to seeking the certification of the delivery condition of a product, being able to certify the agreement reached by the buyer and seller before the transaction of the product and optionally the condition of the product before it is packed is sought.

In which case the following steps take place:
- Generating with software a unique identification code (2)
- Providing the unique identification code on a package, a box or packaging (1) and the corresponding seals thereof for the flaps
- Activating an application as a certifying platform by the private seller
- Reading (4) the unique identification code (2) at source with a smartphone or similar.
- Filling in a descriptive form (8) as an agreement
   - Web link field:
   - Detailed or complementary description form
   - Mobile telephone field
- Optionally, a video recording (7) can be made at source, which allows the private seller or online store to record a video of the condition of the products at source in order to store it in the server (6)
- Sending a notice (9) to the buyer to proceed with the signature
- Acceptance or electronic signature (10) by the buyer of the sales agreement including the details of the product or products to be sold
- Generating an electronic certified sales agreement (11), which is stored in the server (6).

Then this is followed by the steps that enable certifying the condition of the completed delivery given that the buyer received the packaging with the product inside.

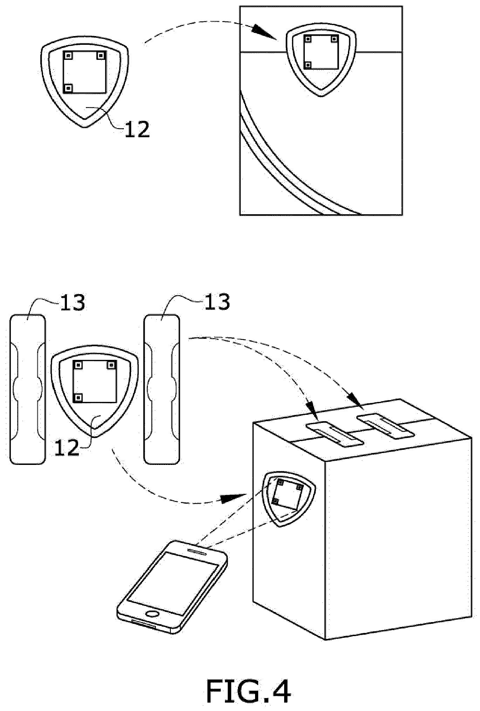

The unique identification code (2) will be provided in a visible area of the box as a first type of seal (12). For the top and bottom access opening of the box, a second type of coded seal (13) will be provided in each one of them as an adhesive strip, as can be observed in Figure 4. The coding in the second type of seals (13) may be incomplete as control digits paired with the unique identification code thereof.

The first type of seal (12) which has complete coding may be used on envelopes or self-adhesive bags wherein the opening thereof causes the destruction of the packaging, generating clear proof of manipulation and not necessarily having a sealing function, nor needing any extra seal for the flaps or access openings thereof.

The second type of seal (13) is used on boxes, in combination with the first type of seal (12), by placing the second type of seal (13) on the access openings or flaps of the box, while the first type of seal (12) is placed on a convenient area for scanning, without necessarily having a sealing function.

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A certification method for certifying the condition of the distributed products after their delivery at the time of opening the packaging, **characterised in that** it comprises the actions of:
- Generating with software a unique identification code for each seller and also for each order processed by each seller.
- Providing a unique identification code for each packaging (1), said unique identification code can be scanned by smartphones (3) or tablets,
- Shipment by the seller and receipt by the buyer of the envelope, package, box, pallet or appropriate packaging provided with their unique identification code.
- Activating an application hosted in a smartphone (3) or tablet that cooperates with the certification process.
- Reading (4) the unique identification code with the smartphone or tablet.
- Starting the recording (7) of a video showing the packaging and the opening process until the shipped product, the condition thereof and the parts that make it up are shown.
- Completing the recording process.
- When the recording process is completed, this recording is uploaded to servers (6)
- In the event that the product is defective, the claim process begins, the application asks the customer for the order number or tracking number and the seller is notified of the claim; failing that, the process ends.

2. The certification method for certifying the condition of the distributed products after their delivery thereof at the time of opening the packaging, according to claim 1, **characterised in that** in the case that the packaging process of the product is also to be certified by the seller before shipment thereof, the following additional actions are carried out after providing the unique identification code and activating an application hosted in a smartphone or tablet
- Reading (4) the unique identification code on the packaging (1) in which the product is going to be shipped with the smartphone (3) or tablet.
- Recording (7) the packaging process of the product to be shipped in the packaging wherein the condition of the product, as well as all the pieces and parts that make it up can be observed.
- Once the recording is completed, said video is automatically sent (8) to the server (6), the unique identification code being linked to the recorded video such that both the seller and the buyer can always optionally access said video at any time during the period that the video can be consulted.

3. The certification method for certifying the condition of the distributed products after their delivery at the time of opening the packaging, according to any of the preceding claims, **characterised in that** in the case that, additionally and in a complementary way, the seller can also check the opening of each shipped order, the following additional actions are carried out after providing a unique identification code and activating an application hosted in a smartphone or tablet.
- Reading the unique identification code on the packaging in which the product is going to be shipped with the smartphone or tablet.
- Registering the order number that is shared together with the corresponding unique identification code for the same shipment.

4. The certification method for certifying the condition of the distributed products after their delivery at the time of opening the packaging, according to claim 1, **characterised in that** in the case of private sellers, the unique identification code must be scanned at source.

5. The certification method for certifying the condition of the distributed products after their delivery at the time of opening the packaging, according to claim 1 or 2 or 3 or 4, **characterised in that** a unique identification code can be a QR code (2) or a barcode.

6. The certification method for certifying the condition of the distributed products after their delivery at the time of opening the packaging, according to any of the preceding claims, **characterised in that** the unique identification code is included in the following possible ways:
- On the carrier's own adhesive label, integrating the two generated codes on a single label
- Being the same code used by the carrier or the store on a label
- On an extra adhesive label that may have holographic technology to ensure that it is not plagiarised, and/or VOID technology or similar which leaves visible adhered residue if there is an attempt to remove it, and/or extra-strong adhesive technology so that it deteriorates if manipulated.
- Screen printing, engraving or painting on the appropriate wrapping for each order, which will include extra-strong adhesive so that said wrapping will deteriorate in the case of manipulation.

7. The certification method for certifying the condition of the distributed products after their delivery at the time of opening the packaging, according to any of the preceding claims, **characterised in that** if the scanned code is the carrier's own code, and it detects a deficiency, the customer must manually send a claim to the seller, sending a link to the video as proof.

8. The certification method for certifying the condition of the distributed products after their delivery at the time of opening the packaging, according to any of the preceding claims, **characterised in that** the unique identification code can be created by the certification system itself or by the code generated by the carrier or by the store.

9. The certification method for certifying the condition of the distributed products after their delivery at the time of opening the packaging, according to claim 1, **characterised in that** after generating with software a unique identification code (2) and providing said unique identification code on packaging (1), the following steps take place with the aim of certifying the agreement reached between the buyer and the seller prior to the transaction:
- Activating an application as a certifying platform, hosted in a smartphone, tablet or any other mobile device and also accessible from a PC with an internet connection, which cooperates with the certification process, by the private seller, wherein in the case of online stores it will suffice that these stores have been previously registered in the platform; therefore, it will not be mandatory for them to activate the application or enter the platform every time they need to make a shipment with the certification we are describing.
- Reading (4) the unique identification code (2) of the seal or seals at source with a smartphone, tablet, PC peripheral or any other mobile device to identify and register them on the certifying platform, wherein this step is mandatory for sales made by private sellers; however, it is not mandatory for sales made by online stores since each store will have its own coding, but one that is unique for each of the seals that they use, such that it will be possible to identify the store at the destination and associate the order corresponding to that sale, therefore facilitating the task of shipment processing or automation.
- Filling in a descriptive form (8) as an agreement on the product or products to be sold, including the following fields which are only mandatory for private sellers and not for online stores.
- Sending (9) a notice to the buyer to proceed with the signature, wherein once the descriptive form about the agreement has been saved along with the coding of the seals, if necessary, and the mobile phone field, the certifying platform will notify the buyer that the sales agreement is available on the platform to be signed, wherein this step is mandatory for sales made by private sellers; however, it is not mandatory for sales made by online stores.
- Acceptance or electronic signature (10) by the buyer of the sales agreement including the details of the product or products to be sold, wherein this step is mandatory for buyers who intend to make a purchase from private sellers; however, it is not mandatory for buyers who intend to make a purchase from online stores.
- Generating a certified sales agreement (11). The platform will generate a certified sales agreement based on the information obtained in the previous steps. To be able to include certified proof of the seller's advertisement in the agreement, the platform will capture and store the advertisement's web page so that it cannot be manipulated or edited after the buyer has accepted. This step is mandatory for sales made by private sellers; however, it is not mandatory for sales made by online stores.
- Closing the packaging and placing the coded security seal or seals by the private seller or online store.

10. The certification method for certifying the condition of the distributed products after their delivery at the time of opening the packaging, according to claim 9, **characterised in that** the data provided for filling in the form are:
* Web link field of the advertisement published by the seller on any website.
* Detailed or complementary description form which includes detailed or complementary information about the product or products to be sold, wherein texts about the condition, features, photographs, accessories, units and other relevant information thereof not shown in the advertisement or discussed by both parties after a private telephone conversation, by courier or any other communication method may be included.
* Buyer's mobile telephone field.

11. The certification method for certifying the condition of the distributed products after their delivery at the time of opening the packaging, according to claim 9 or 10, **characterised in that** a video recording (7) of the condition of the products at source, the packaging thereof and the placement of the necessary security seal or seals before proceeding with the shipment is made at source in order to store it in the cloud and that it is made before sending the sales agreement to the buyer.
